(19) Europäisches Patentamt / European Patent Office / Office européen des brevets

(11) EP 3 547 334 A1

(12) EUROPEAN PATENT APPLICATION

(43) Date of publication:
02.10.2019 Bulletin 2019/40

(21) Application number: 19159420.9

(22) Date of filing: 26.02.2019

(51) Int Cl.:
H01F 1/26 (2006.01)         H01F 1/147 (2006.01)
H01F 3/08 (2006.01)         H01F 27/255 (2006.01)
H01F 41/02 (2006.01)        B22F 1/00 (2006.01)
H01F 3/10 (2006.01)         H01F 17/04 (2006.01)
H01F 1/33 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.03.2018 JP 2018064082

(71) Applicant: Sumida Corporation
Tokyo, 104-8547 (JP)

(72) Inventors:
• KAWARAI, Mitsugu
  NATORI CITY, MIYAGI 981-1226 (JP)
• YAMADA, Satoru
  NATORI CITY, MIYAGI 981-1226 (JP)

(74) Representative: Cabinet Beau de Loménie
158, rue de l'Université
75340 Paris Cedex 07 (FR)

(54) **COIL COMPONENT, ELECTRONIC EQUIPMENT, METALLIC MAGNETIC POWDER AND SUPPORT APPARATUS**

(57) A coil component (100) including a coil (15) formed by winding an insulation-coated wire (18) and a composite magnetic body (20) embed with the coil (15), wherein the composite magnetic body contains: a metallic magnetic powder made by powderizing a metallic magnetic material and a binder resin; and wherein the average particle size $D_{50}[\mu m]$ of the metallic magnetic powder satisfies the following formula (1):

$$D_{50} \leq 2.192 \times (Fmax)^{-0.518} \times \rho^{0.577} \ ... \ (1)$$

wherein (Fmax) is an upper limit operation-frequency [MHz] at which Q-value starts decreasing beyond the maximum value in a case of increasing the frequency applied to the coil component, and "ρ" is electrical-resistivity [$\mu\Omega\cdot$cm] of the metallic magnetic material.

**FIG. 3**

EP 3 547 334 A1

**Description**

CROSS REFERENCES TO RELATED APPLICATIONS

The present invention contains subject matter related to Japanese Patent Application JP2018-64082 filed in the Japanese Patent Office on March 29, 2018, the entire contents of which being incorporated herein by reference.

BACKGROUND OF THE INVENTION

Field of the Invention:

The present invention relates to a coil component, electronic equipment including the coil component, a metallic magnetic powder used for the coil component, and a support apparatus that identifies an allowable upper limit value of the average particle size of the metallic magnetic powder.

Description of the Related Art:

There has been known a coil component which is an electronic component having a coil. For the coil components, there are known various kinds of configurations and in a Patent Document 1 (Japanese unexamined patent publication No. 2006-319020), there is described a coil component in which a coil is embedded into a composite magnetic body molded by mixing a metallic magnetic powder and a binder resin. There can be realized a high resistivity by interposing the binder resin as an insulation material among the particles of the metallic magnetic powders and it is possible to obtain a high saturated magnetic flux density for the coil component.
On the other hand, for a DC-DC converter in the past, the switching frequency thereof was designed to be from around few-hundreds kHz to 2MHz. In recent years, in order to obtain much higher efficiency, a Q characteristic, in which a high Q-value can be obtained in the switching frequency range, has been requested for the inductor (coil component).
On the other hand, in recent years, it has been studied to increase the switching frequency up to around 10MHz. By increasing the switching frequency, it is possible to decrease the inductance value of the inductor used in the smoothing circuit of the converter and as the result thereof, significant miniaturization of the inductor can be achieved.

SUMMARY OF THE INVENTION

The composite magnetic body (metallic magnetic composite material) made by compounding the metallic magnetic powder and the binder resin has such a characteristic that the loss increases rapidly as the operating frequency becomes high-frequency. For this reason, the composite magnetic body has such a serious defect that the loss of the inductor becomes extremely large at high-frequency values of the switching frequency, that the Q-value decreases rapidly, and that the efficiency of the DC-DC converter is greatly spoiled.
The present invention was invented in view of the abovementioned problem and provides: a coil component in which it is possible to obtain a high saturated magnetic flux density and also to obtain a high Q-value even in a high frequency region of the switching frequency; electronic equipment including such a coil component; and a metallic magnetic powder used for such a coil component.
Prior to the completion of the present invention, the inventors of the present invention intensively studied the cause of the loss with regard to the metallic magnetic composite material. As the result thereof, there was discovered the fact that a hysteresis loss of the magnetic powder, which is proportional to the frequency, becomes dominant in the frequency range of a few MHz or less, and an eddy current loss thereof, which is proportional to the square of the frequency, becomes dominant in the high frequency range equal to or more than the above. Such an eddy current loss is not large for a ferrite, which is an electrical insulator, within the materials used for a general magnetic core, but is a large loss for the metallic magnetic material which is an electrical conductor.
In general, there are two modes for the eddy current loss in the metallic magnetic composite material, in which one of them is a loss (inter-particle eddy current loss) caused by an eddy current flowing between metallic magnetic powder particles and the other of them is a loss (intra-particle eddy current loss) caused by an eddy current generated inside the individual single metallic magnetic powder particles. Then, for the metallic magnetic composite material, it is possible to secure the inter-particle insulation by the insulating surface-treatment of the metallic magnetic powder, or by the compounded binder-resin therefore, it is possible to sufficiently suppress the inter-particle eddy current loss. Then, the inventors of the present invention, etc. hypothesized that the intra-particle eddy current loss would increase at high-frequency values of the switching frequency and accordingly the Q-value would decrease drastically, and there were carried out various kinds of experiments and verifications in order to substantiate such a hypothesis.
Then, the inventors of the present invention, etc. provided various kinds of metallic magnetic material powders having different electrical-resistivities, in addition, prepared the metallic magnetic powders which have different average particle sizes depending on the particle-classification, experimentally created inductors by using those powders, and there were carried out measurements of the Q-values for respective frequencies. Then, surprisingly, it was understood that it is possible, by setting the average particle size of the metallic magnetic powder so as to satisfy the following formula (1), to preferably suppress the intra-particle eddy current loss for a wide frequency range in a high frequency region and also for the metallic magnetic materials having many kinds of electrical-resistivities.

More specifically, the present invention discloses a coil component including a coil formed by winding an insulation-coated wire, and a composite magnetic body having the coil embedded therein, wherein the composite magnetic body contains: a metallic magnetic powder made by powderizing a metallic magnetic material and a binder resin; and wherein the average particle size $D_{50}[\mu m]$ of the metallic magnetic powder satisfies the following formula (1):

$$D_{50} \leq 2.192 \times (Fmax)^{-0.518} \times \rho^{0.577} \ \ldots \ (1)$$

however, it should be noted therein that (Fmax) is upper limit operation-frequency [MHz] at which Q-value starts decreasing beyond the maximum value in a case of increasing the frequency applied to the coil component, and that "ρ" is electrical-resistivity $[\mu\Omega\cdot cm]$ of the metallic magnetic material.

In addition, one configuration of the present invention discloses electronic equipment including: the coil component; a switching element whose switching frequency is 1MHz or more; and a circuit board including a switching circuit equipped with the coil component and the switching element.

In addition, one configuration of the present invention discloses a metallic magnetic powder which is made by powderizing a metallic magnetic material and which is used for the coil component, wherein the average particle size $D_{50}[\mu m]$ thereof satisfies the following formula (1):

$$D_{50} \leq 2.192 \times (Fmax)^{-0.518} \times \rho^{0.577} \ \ldots \ (1).$$

In addition, one configuration of the present invention discloses a support apparatus that identifies an allowable upper limit value ($D_{MAX}$) of the average particle size $D_{50}[\mu m]$ of a metallic magnetic powder which has a predetermined electrical-resistivity ($\rho[\mu\Omega\cdot cm]$) and which is used for a composite magnetic body embedded with a coil including: a storage unit which is stored with information expressing the following formula (3):

$$D_{MAX} = 2.192 \times (applied\text{-}frequency)^{-0.518} \times \rho^{0.577} \ \ldots \ (3);$$

an input unit which accepts an input having electrical-resistivity (ρ) and having applied-frequency; a reference unit which reads out the allowable upper limit value ($D_{MAX}$) of the average particle size ($D_{50}$) of the metallic magnetic powder by referring to the storage unit and by substituting the electrical-resistivity and the applied-frequency, which were inputted, for the formula (3); and an output unit which outputs the allowable upper limit value ($D_{MAX}$), which was read out.

According to the coil component and the electronic equipment which relate to the present invention, the intra-particle eddy current loss in the high frequency band can be suppressed for the composite magnetic body which can obtain a high saturated magnetic flux density. For that reason, in the case of using the coil component of the present invention for a DC-DC converter, it is possible to obtain a high Q-value even for a high switching frequency, by which a high converter efficiency can be realized. In addition, according to the metallic magnetic powder of the present invention, it is possible to realize the abovementioned coil component by a configuration in which the composite magnetic body is created by mixing the binder resin and is used for a magnetic core.

BRIEF DESCRIPTION OF THE DRAWINGS

FIG. 1A is a perspective view showing one example of a coil component which relates to an exemplified embodiment of the present invention;
FIG. 1B is a cross-sectional view at a line B-B of FIG. 1A;
FIG. 2 is a diagram which explains one example of Q-F characteristic of an inductor;
FIG. 3 is a diagram showing a relation between electrical-resistivity (ρ) and average particle size ($D_{50}$) in a case in which upper limit operation-frequency (Fmax) is changed from 1MHz to 10MHz; and

FIG. 4 is a diagram showing a relation between average particle size ($D_{50}$) and Q-value.

DESCRIPTION OF THE PREFERRED EMBODIMENTS

Hereinafter, there will be explained an exemplified embodiment of the present invention.

First, there will be explained a coil component 100 including a composite magnetic body 20 which is created by using the metallic magnetic powder of the present invention.

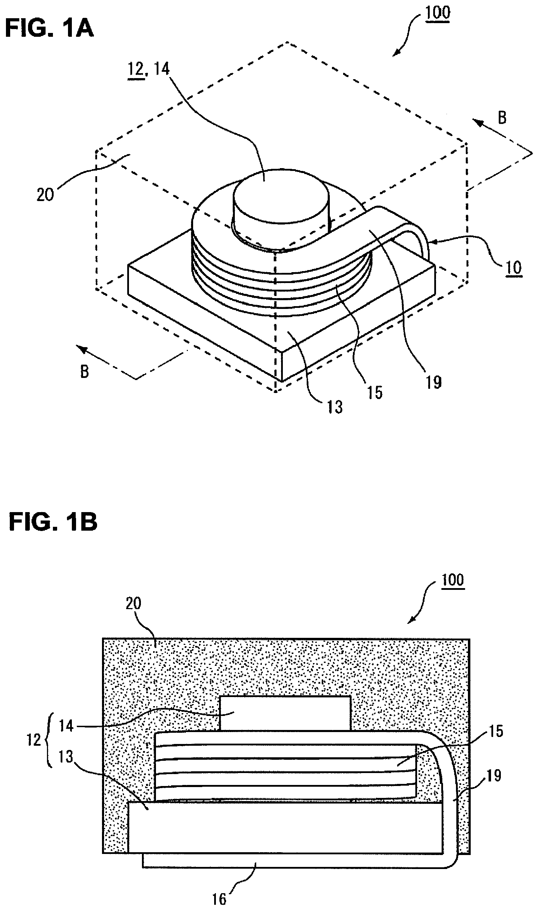

FIG. 1A is a perspective view showing one example of a coil component 100 which relates to an exemplified embodiment of the present invention. FIG. 1B is a cross-sectional view at a line B-B of FIG. 1A. In FIG. 1A, for descriptive purposes, the composite magnetic body 20 is illustrated by broken lines and the coil-assembly body 10 covered by the composite magnetic body 20 is illustrated by solid lines. In FIG. 1B, hatching is applied only to the cross-section surface of the composite magnetic body 20 and hatching is omitted for the cross-section surface of the coil-assembly body 10.

The coil component 100 is an electronic component which includes a coil 15 and in which the coil 15 generates inductance by supplying power to a terminal portion 16, and for the electronic component, there can be cited various kinds of magnetic elements which include magnetic cores. Specifically, there can be cited a coil (including choke coil), an inductor, a noise filter, a reactor, a motor, a generator, a transformer, an antenna, or the like. In particular, the coil component 100 of the present exemplified embodiment is preferably used for an inductor which constitutes a DC-DC converter.

For the present exemplified embodiment, the coil component 100, in which a wire of a single flat wire is wound edgewise, is illustrated by an example, but it is allowed to use a round wire as the wire, and in addition, there is no limitation in particular for the number of the wires or the number of turns. The coil component 100 includes the coil 15 made by winding an insulation-coated wire and the composite magnetic body 20 embedded with that coil 15. The wording "the composite magnetic body 20 is embedded with the coil" means that the composite magnetic body 20 covers at least a portion of the wound portion of the wire.

The coil 15 is mounted on the magnetic core 12 to constitute the coil-assembly body 10. The composite magnetic body 20 includes a metallic magnetic powder made by powderizing a metallic magnetic material and a binder resin, in which the composite magnetic body 20 is a magnetic exterior body covering the coil-assembly body 10. It is allowed for the composite magnetic body 20 to be filled in the gaps between the mutually neighboring loops of the wound wire constituting the coil 15.

The magnetic core 12 is provided with a plate-shaped portion 13 and a core portion 14 which rises from this plate-shaped portion 13, in which the plate-shaped portion 13 and the core portion 14 are integrally formed by a single material. The magnetic core 12 is a ferrite core formed by baking ferrite or a dust core formed by compressing and molding magnetic powders. For the magnetic powders of the dust core, it is possible to use magnetic powders in which iron (Fe) is made to be the main component and in which silicone (Si) and chromium (Cr) are added respectively in a ratio of 1wt% or more and also of 10wt% or less. From the viewpoint of reducing core loss, it is also allowed to use metallic magnetic powders formed by mixing the aforesaid magnetic powders and amorphous metals. For the amorphous metal, it is possible to use a carbon containing amorphous metal in which iron (Fe) is made to be the main component, in which silicone (Si) and chromium (Cr) are contained respectively in a ratio of 1wt% or more and also of 10wt% or less, and in addition, in which carbon (C) is contained in a ratio of 0.1wt% or more and also of 5wt% or less.

For the coil component 100 illustrated in FIGS. 1A and 1B by an example, a non-wound portion 19 is pulled out from the wound coil 15 and is bent so as to go along the lower surface of the plate-shaped portion 13 of the magnetic core 12, and there is constituted the terminal portion 16. The terminal portion 16 is formed flatly along the lower surface of the coil component 100 and is used as a surface-mounting terminal. The wire constituting the coil 15 is applied with insulation coating in the area except the terminal portion 16 and the insulation coating is removed for the terminal portion 16.

It should be noted that the coil component 100 shown in FIGS. 1A and 1B is one example of the present invention and the present invention is not to be limited by the illustrated configuration. For example, it is not mandatory for the non-wound portion 19 and the terminal portion 16 to be constituted by wires common with the coil 15. In addition, it is allowed to employ a configuration in which the magnetic core 12 is omitted and the magnetic core is to be formed by filling the inside of the loop of coil 15 with the composite magnetic body 20.

<Composite Magnetic Body>

Hereinafter, there will be explained the composite magnetic body 20 embedded with the coil 15 in detail. The composite magnetic body 20 contains at least a metallic magnetic powder made by powderizing a metallic magnetic material, and a binder resin.

The composite magnetic body 20 of the present exemplified embodiment forms a substantially rectangular parallelepiped and embeds the whole core portion 14 composed of the coil 15 and the magnetic core 12. However, the shape of the composite magnetic body 20 can be designed arbitrarily and is not to be limited by the substantially rectangular parallelepiped.

There will be explained the metallic magnetic powder.

There is no limitation for the metallic magnetic powder in particular if it is a magnetic powder in which iron is made to be the main component and, for example, it is possible to use an alloy which contains iron as its main component and which is added, for its sub-components, with at least one or more kinds of metallic materials selected from the group composed of nickel (Ni), silicon (Si), chromium (Cr) and aluminum (Al). In addition, it is allowed to use an amorphous metallic powder. Specifically, it is possible to cite alloys such as Fe-Si-based alloy, Fe-Al-based alloy, sendust (Fe-Si-Al-based) alloy and permalloy (Ni-Fe-based) alloy; a non-crystalline metal such as an amorphous metal; a crystalline iron powder such as a carbonyl iron powder; and the like.

It is preferable for the iron containing ratio in the metallic magnetic powder to be 90wt% or more and it is more preferable to be 92wt% or more. In addition, it is preferable for the iron containing ratio to be 98wt% or less and it is more preferable to be 97wt% or less.

It is preferable that the metallic magnetic powder contains at least one of sub-components as mentioned above, in which the remaining portion thereof is composed of iron and inevitable impurities.

It is preferable for the metallic magnetic powder to contain Ni by 2wt% to 10wt% and it is more preferable to contain it by 3wt% to 8wt%. Ni is combined with oxygen in the atmosphere and creates chemically stable oxide. The Ni oxide is excellent in the corrosion resistance, in addition thereto, the resistivity thereof is large, and therefore, by the fact that Ni-oxide layer is formed in the vicinity of the surface of the particle constituting the composite magnetic body 20, it is possible to insulate between particles more reliably and it is possible to suppress the inter-particle eddy current loss. Therefore, by setting the Ni containing ratio within the abovementioned range, it is possible to obtain a metallic magnetic composite material in which the corrosion resistance is excellent, concurrently, in which it is possible to manufacture a coil component whose eddy current loss is smaller.

For similar reasons, it is preferable for the metallic magnetic powder to contain Cr by 2wt% to 10wt% and it is more preferable to contain it by 3wt% to 8wt%. In addition, it is preferable for the metallic magnetic powder to contain Al by 2wt% to 10wt% and it is more preferable to contain it by 3wt% to 8wt%.

It is preferable for the metallic magnetic powder to contain Si by 2wt% to 10wt% and it is more preferable to contain by 3wt% to 8wt%. Si is a component which can heighten the permeability of the electronic component obtained by using the metallic magnetic powder. In addition, when the metallic magnetic powder contains Si, the resistivity thereof is heightened and therefore, Si is also a component which can suppress the inter-particle eddy current loss. Therefore, by setting the Si containing ratio within the abovementioned range, it is possible to obtain a metallic magnetic composite material which can manufacture a coil component whose eddy current loss is smaller while whose permeability can be increased.

Other than the main component and the sub-components as mentioned above, it is allowed for the metallic magnetic powder to contain, as a component whose containing ratio is smaller than those of the sub-components, to contain at least one kind of component selected from: B (boron), Ti (titanium), V (vanadium), Mn (manganese), Co (cobalt), Cu (copper), Ga (gallium), Ge (germanium), Zr (zirconium), Nb (niobium), Mo (molybdenum), Ru (ruthenium), Rh (rhodium), Ta (tantalum), and the like. In that case, it is preferable to set the total containing ratio of these components to be 1wt% or less.

In addition, it is allowed for the metallic magnetic powder to contain a component such as P (phosphorus), S (sulfur) or the like which is to be mixed inevitably in the manufacturing process thereof. In that case, it is preferable to set the total containing ratio of these components to be 1wt% or less.

A preferable particle size of the metallic magnetic powder will be described in detail later on.

It is preferable to use the metallic magnetic powder, which is manufactured by water atomization method or by gas atomization method.

The water atomization method is a method of manufacturing a metallic powder by micronizing and also cooling molten metal under a situation in which the molten metal (metal which was molten) is made to collide with high-speed jetted water (atomized water). The metallic magnetic powder manufactured by the water atomization method is oxidized at its surface in the manufacturing process thereof and an oxide layer containing iron oxide is formed naturally. The gas atomization method is a method of forming a metallic powder by powderizing and solidifying the molten metal under a situation in which jet air current such as inert gas, air or the like is sprayed onto the molten-metal flow from the surroundings thereof. With regard to the metallic magnetic powder manufactured by the water atomization method or gas atomization method, the shape thereof becomes close to a spherical shape and therefore, it is possible to increase the filling rate of the metallic magnetic powder for the composite magnetic body 20.

In order to suppress the intra-particle eddy current loss, it is allowed to apply an insulation coating onto the surface of the metallic magnetic powder. For the insulation coating, it is possible to preferably use a powder coating such as a silica coating, an alumina coating or the like.

With regard to the composite magnetic body 20, it is preferable to set the containing ratio of the metallic magnetic powder to be 90wt% to 99wt% and it is more preferable to set to be 92wt% to 98wt%.

There will be explained the binder resin.

There is no limitation for the binder resin in particular if it plays a role as a binder, and there can be cited thermosetting resins such as a silicone-based resin, an epoxy-based resin, a phenol-based resin, a polyamide-based resin, a polyimide-based resin, a polyphenylenesulfide-based resin and the like, in addition, there can be cited thermoplastic resins such as polyvinylalcohol, polystyrene, Polyethylene, polycarbonate and the like. In particular, the silicone-based resin or the epoxy-based thermosetting resin is preferable. It is allowed for the binder resin to be a solid powder and it is also allowed to be a liquid.

It is preferable for the contained amount of the binder resin for the material of the present invention to be an amount satisfying a condition in which the calculated value of ((contained amount (weight) of the binder resin) / ((contained amount (weight) of the binder resin) + (contained amount (weight) of the metallic magnetic powder)) $\times$ 100) becomes 1wt% to 10wt%, it is more preferable to be an amount satisfying a condition in which the calculated value becomes 2wt% to 8wt%, and it is still more preferable to be an amount satisfying a condition in which the calculated value becomes around 4.0wt%.

If the contained amount of the binder resin for the material of the present invention lies in such a range, it is possible to obtain a composite magnetic body 20 in which since the metallic magnetic powder is extremely hard to rust, the electrical characteristic is hard to deteriorate, and also, in which a coil component excellent in strength can be obtained.

It is also allowed for the composite magnetic body 20 to contain an organic metal soap for an additional component in a case in which the binder resin is a thermosetting resin. It is preferable for the organic metal soap to be a soap in which the melting point thereof is equal to or less than the thermosetting temperature of the binder resin and also in which Na (sodium) or K (potassium) is not contained.

At the time when preparing the composite magnetic body 20, there is used, if necessary, a solvent for dissolving the binder resin. For the solvent, there can be illustrated, by an example, organic solvents such as alcohol, toluene, chloroform, methylethylketone, acetone, ethylacetate and the like.

It is allowed for the composite magnetic body 20 to be a body which is granulated. For the granulation method, it is possible to apply a method, publicly known in the past, such as kneading granulation method, pelletizing method or the like. In addition, it is allowed for the composite magnetic body 20 to be a body which is applied with particle-classification. For the particle-classification method, for example, there can be cited dry particle-classification such as sieve particle-classification, inertial particle-classification or centrifugal particle-classification; wet particle-classification such as sedimentation particle-classification; or the like.

<Particle Size of Metallic Magnetic Powder>

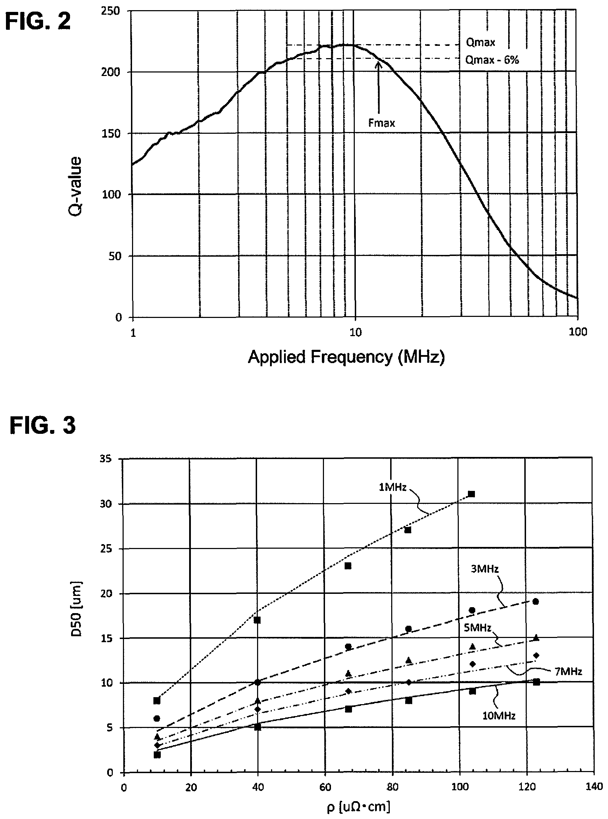

In order to suppress the intra-particle eddy current loss and to realize the high Q-value, the inventors of the present invention analyzed the Q-F characteristic (relation between applied-frequency and Q-value) of an inductor (coil component). FIG. 2 is a diagram which shows one example of Q-F characteristic of an inductor. With regard to a general inductor, as shown in FIG. 2, when the applied-frequency is continuously increased from a low value, the Q-value thereof is increased and then, after indicating the maximum value (Qmax), when increasing the applied-frequency furthermore, the Q-value decreases gradually and thereafter rapidly decreases continuously. Then, as an applied-frequency which is practically not greatly different from the frequency at which Qmax occurs, and also which lies in front of the frequency at which the rapid decrease of the Q-value starts, a frequency which lies on the high frequency side compared with the frequency at which Qmax occurs and at which the Q-value decreases as much as 6% from Qmax is to be defined as upper limit operation-frequency (Fmax). This upper limit operation-frequency (Fmax) is the maximum frequency at which it is possible to use that inductor with low loss.

Next, there was investigated the relation between the average particle size $D_{50}[\mu m]$ of the metallic magnetic powder which is used for the composite magnetic body embedded with the inductor coil and the upper limit operation-frequency (Fmax[MHz]). Specifically, by providing six different types of metallic magnetic materials, the electrical-resistivity ($\rho[\mu\Omega \cdot cm]$) was changed in six ways, and each metallic magnetic material was powderized by the water atomization method. Then, further by using the air particle-classification method, the respective metallic magnetic powders each having own electrical-resistivity were adjusted into 10 or more powders in which the average particle sizes ($D_{50}$) thereof are different within $1\mu m$ to $30\mu m$.

It should be noted that the wording "average particle size ($D_{50}$)" in the present specification means "grain diameter at the integrated value 50% for the grain-size distribution" which was obtained by using a particle-size distribution measuring apparatus depending on laser diffraction & scattering method (micro-track method). For the specific measurement equipment, it is possible to cite LA-960 (made by Horiba, Ltd.) which is a laser diffraction & scattering type particle size distribution (grain-size distribution) measuring apparatus. In addition, the wording "electrical-resistivity of metallic magnetic powder" means resistivity calculated from the resistance value which is measured by making the bulk metallic magnetic material before the powderizing as a sample. More specifically, in the present specification, the electrical-resistivity of the metallic magnetic material and the electrical-resistivity of the metallic magnetic powder have same meanings as each other.

The metallic magnetic powders with electrical-resistivity ($\rho$=10[$\mu\Omega\cdot$cm]), which are shown in the following "Table 1", are powders obtained by using Fe simple substances. Then, the metallic magnetic powders with the electrical-resistivities (p = 40, 67, 85, 104, 123 [$\mu\Omega\cdot$cm]) are powders using Fe50Ni alloy, Fe4Cr3Si alloy, Fe10Si5Al alloy, Fe10Cr3Al alloy and Fe19Cr3Al alloy, respectively (where the number preceding the Ni, Cr, Si and Al indicates the weight percent of these substances present in the respective alloys, the remainder in each case being Fe).

Then, with regard to each of the abovementioned classified powders, a thermosetting type epoxy resin is mixed as a binder resin so as to become a contained amount of 4.0wt% and further, methylethylketone (MEK) is added and mixed as a solvent, and the whole thereof is stirred sufficiently by a self-revolving type mixer. Thereafter, the solvent is removed while stirred and there was obtained the composite magnetic body by granulating the powder into a granulated shape, which has a grain size of 300$\mu$m or less. By using the created granulation powder of the composite magnetic body, a rectangular parallelepiped inductor element (coil component) having 6mm-square and 3mm-height was created in the following manner.

More specifically, a coil of 2.5 turns was created by using an insulation-coated copper wire (round wire) having wire diameter 0.5mm, and this coil was set in the inside of a mold inserted with a lower punch. At that time, the both ends (coil end-portions) of the copper wire which constitutes the coil were pulled out from the wound portion and were exposed toward the outside of the mold. Thereafter, the abovementioned granulation powder of approximately 0.5g was put into the mold and after setting the upper punch, the composite magnetic body was press-molded together with the coil by the pressure of 3 to 8 [ton/cm$^2$] to form a coil molded-body. The molding condition was set such that every one of the powders was created by being prepared such that the space factor of the metallic magnetic powder within the whole volume of the coil molded-body becomes 70vol%.

After the press molding, the coil molded-body was taken out from the mold, this body was heat-treated at 150°C for two hours, and there was carried out a thermosetting processing for the thermosetting type epoxy resin which is the binder resin. Thereafter, a plated pair of copper electrodes were bonded onto the coil component and further, the both end-portions of the coil exposed from the composite magnetic body were respectively soldered onto those copper electrodes to form an inductor element (coil component).

With regard to the created inductor element, there was carried out observation of the Q-value for every applied-frequency by using a HP4294A (Impedance Analyzer made by "Keysight Technologies"). Then, there was measured the frequency at which the Q-value shows the maximum value (Qmax) and there was measured the upper limit operation-frequency (Fmax) which lies on the high frequency side compared with the aforesaid frequency, and at which the Q-value decreases as much as 6% from the Qmax. As a result thereof, it was understood, for every value of electrical-resistivity (p), that for the inductor element, as the average particle size ($D_{50}$) of the metallic magnetic powder increases, the upper limit operation-frequency (Fmax) decreases. In other words, it was understood, in a case in which the electrical-resistivity (p) is constant, that the upper limit operation-frequency (Fmax) of the inductor element decreases monotonically along with the increase in the average particle size ($D_{50}$) of the metallic magnetic powder of the composite magnetic body.

Next, based on the relational formula between the abovementioned average particle size ($D_{50}$) and the upper limit operation-frequency (Fmax), there was found out the average particle size ($D_{50}$) of the metallic magnetic powder for every electrical-resistivity (p) in such a condition that the upper limit operation-frequency (Fmax) of the inductor element becomes 10MHz, 7MHz, 5MHz, 3MHz, 1MHz. The result thereof is shown in "Table 1".

[Table 1]

| $\rho$ ($\mu\Omega\cdot$cm) | Fmax=10MHz D50($\mu$m) | Fmax=7MHz D50 ($\mu$m) | Fmax=5MHz D50 ($\mu$m) | Fmax=3MHz D50 ($\mu$m) | Fmax=1MHz D50 ($\mu$m) |
|---|---|---|---|---|---|
| 10 | 2 | 3 | 4 | 6 | 8 |
| 40 | 5 | 7 | 8 | 10 | 17 |
| 67 | 7 | 9 | 11 | 14 | 23 |
| 85 | 8 | 10 | 12.5 | 16 | 27 |
| 104 | 9 | 12 | 14 | 18 | 31 |
| 123 | 10 | 13 | 15 | 19 | - |

In a case of an inductor element which uses, for example, a metallic magnetic powder, whose electrical-resistivity (p) is 10[$\mu\Omega\cdot$cm], for the composite magnetic body, "Table 1" means that the average particle size ($D_{50}$) of the metallic

magnetic powder, in which the upper limit operation-frequency (Fmax) becomes 10MHz, was $2\mu m$. Similarly, in a case of the metallic magnetic powder whose electrical-resistivity (p) is $10[\mu\Omega\cdot cm]$, the average particle sizes ($D_{50}$) in which the upper limit operation-frequencies (Fmax) became 7MHz, 5MHz, 3MHz and 1MHz were $3\mu m$, $4\mu m$, $6\mu m$ and $8\mu m$ respectively.

Then, in the case of setting the electrical-resistivities (p) to be 40, 67, 85, 104 and 123 $[\mu\Omega\cdot cm]$ by making the materials of the metallic magnetic powders different as mentioned above, the average particle sizes ($D_{50}[\mu m]$), in which the upper limit operation-frequencies (Fmax) of the inductor element became 10MHz, 7MHz, 5MHz, 3MHz and 1MHz, respectively became the numerical values shown in "Table 1".

FIG. 3 is a diagram showing a relation between electrical-resistivity (p) and average particle size ($D_{50}$) in a case in which upper limit operation-frequency (Fmax) is changed from 1MHz to 10MHz, in which there are plotted the results of "Table 1" by assuming the electrical-resistivity (p) as the horizontal axis and the average particle size ($D_{50}$) as the vertical axis. In FIG. 3, there are displayed approximate-curves for the respective upper limit operation-frequencies (Fmax) by being overlapped. Every approximate-curve thereof is expressed by the following common formula (1a):

$$D_{50} = 2.192 \times (Fmax)^{-0.518} \times \rho^{0.577} \ ... \ (1a).$$

More specifically, it was understood surprisingly that it is possible, for a wide high frequency region ranging from 1MHz to 10MHz, to define the average particle sizes ($D_{50}$) of the metallic magnetic powders, which correctly realize the upper limit operation-frequencies (Fmax), according to the common formula (1a).

Then, it can be said that this phenomenon is confirmed and substantiated in such a wide range in which as shown in "Table 1", the electrical-resistivities (p) of the metallic magnetic powders lie at least between $10[\mu\Omega\cdot cm]$ or more and $140[\mu\Omega\cdot cm]$ or less. There is a case in which the coefficient and the index on the right side of the above formula (1a) slightly change depending on various kinds of parameters relied upon such as the material of the binder resin; the abovementioned space factor of the metallic magnetic powder; the setting of making the frequency as the upper limit operation-frequency (Fmax) depending on how much percentage the Q-value thereof decreases from the Qmax; the wire diameter; the number of turns of the coil; and the like, but the variation ranges thereof are narrow and it is practically possible for the abovementioned average particle size ($D_{50}$) to be expressed by the above formula (1a) which is formed by making the upper limit operation-frequency (Fmax) and the electrical-resistivity ($\rho$) as two variables.

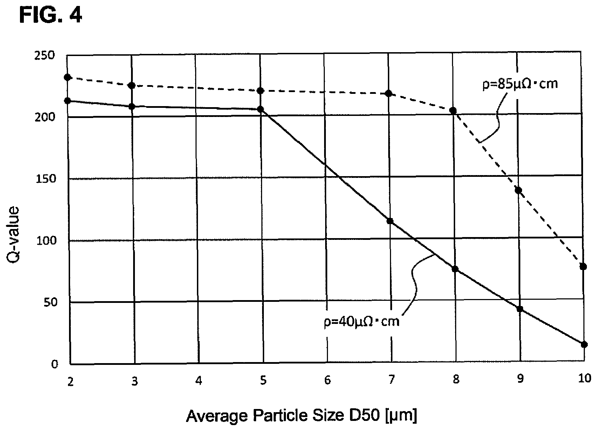

Here, FIG. 4 is a diagram showing a relation between the average particle size ($D_{50}$) of the metallic magnetic powder and the maximum Q-value of the inductor element which is constituted by embedding the coil by using such a metallic magnetic powder for the composite magnetic body. FIG. 4 shows the relation between the average particle size ($D_{50}$: horizontal axis) of the metallic magnetic powder and the maximum Q-value (Qmax: vertical axis) in a case in which the applied-frequency is set to be 10MHz and the electrical-resistivity ($\rho$) of the metallic magnetic powder is set to be constant by $40[\mu\Omega\cdot cm]$ or $85[\mu\Omega\cdot cm]$. As shown in FIG. 4, when making the average particle size ($D_{50}$) of the metallic magnetic powder smaller, the maximum Q-value of the inductor element maximum value increases monotonically along therewith and it is understood that this overall trend is common regardless of the value of the electrical-resistivity ($\rho$) of the metallic magnetic powder. In addition, when decreasing the average particle size ($D_{50}$) of the metallic magnetic powder from a large value, the maximum Q-value increases linearly, but it is understood that this trend is rapidly attenuated by making a predetermined average particle size ($D_{50}$) as a boundary, and the maximum Q-value becomes approximately constant for the average particle size ($D_{50}$) which is equal to or less than that predetermined size thereof. It should be noted that in a case in which the electrical-resistivity ($\rho$) of the metallic magnetic powder is $40[\mu\Omega\cdot cm]$, the average particle size ($D_{50}$) which becomes the abovementioned boundary is approximately $5\mu m$ and in a case in which the electrical-resistivity ($\rho$) is $85[\mu\Omega\cdot cm]$, the average particle size ($D_{50}$) which becomes the abovementioned boundary is approximately $8\mu m$. In the graph of 10MHz in FIG. 3, those numerical values correspond roughly to the results of the electrical-resistivities ($\rho=40[\mu\Omega\cdot cm]$) and ($\rho=85[\mu\Omega\cdot cm]$).

From the result of FIG. 4 and from the abovementioned formula (1a), if the particle size is the average particle size ($D_{50}$) or less, which is calculated by the formula (1a), it can be said that it is possible to realize a high Q-value and more specifically, it is possible to realize a Q-value (hereinafter, referred to as "Qmax equivalent value") which is equivalently high or higher compared with the value decreased by 6% from the Qmax. From the description above, there can be introduced the following formula (1) which has the right side same as that of the abovementioned formula (1a):

$$D_{50} \leq 2.192 \times (Fmax)^{-0.518} \times \rho^{0.577} \ ... \ (1).$$

However, it should be noted therein that (Fmax) is upper limit operation-frequency [MHz] at which Q-value starts decreasing beyond the maximum value in the case of increasing the frequency applied to the coil component, and that "p" is electrical-resistivity [$\mu\Omega\cdot$cm] of the metallic magnetic material. Then, by the fact that the average particle size $D_{50}[\mu$m] of the metallic magnetic powder satisfies the abovementioned formula (1), it is possible for the coil component (inductor element) to realize the "Qmax equivalent value".

Then, the metallic magnetic powder of the present invention is a metallic magnetic powder which is used for the composite magnetic body embedding the coil in the abovementioned coil component and which is made by powderizing a metallic magnetic material, and the metallic magnetic powder is characterized by satisfying the abovementioned formula (1).

The coil component provided by the present invention is preferably used for an inductor element constituting a DC-DC converter. Then, this inductor element suppresses the intra-particle eddy current loss and realizes a high Q-value (Qmax equivalent value) even in a high frequency band and therefore, it is preferably used in particular for an embodiment in which the applied-frequency lies in a high frequency band. Here, the wording "high frequency band" means 1MHz or more. More specifically, it is possible for the coil component provided by the present invention to raise the upper limit operation-frequency [MHz] thereof up to 1MHz or more. In addition, it is allowed to raise the upper limit operation-frequency [MHz] up to 10MHz or more.

It is possible for the inductor element which is a coil component of the present exemplified embodiment to be used for electronic equipment. More specifically, the electronic equipment provided by the present invention is provided with: a coil component embedding a coil by a composite magnetic body which includes a metallic magnetic powder having the average particle size ($D_{50}$) satisfying the abovementioned formula (1) and a binder resin; a switching element whose switching frequency is 1MHz or more; and a circuit board including a switching circuit equipped with those of the coil component and the switching element. It is possible, depending on such a constitution above, to restore a DC current again by employing a configuration in which a DC current inputted to the electronic equipment is fractionized to obtain a pulse current by the switching element, then, this pulse current is voltage-converted to a desired voltage by the coil component (inductor element) and thereafter is rectified by a rectifier; by employing another similar configuration; or the like. Then, even if the switching frequency is a high frequency such as 1MHz or more, it is possible to suppress the intra-particle eddy current loss in the inductor element and to carry out the DC-DC voltage conversion at a high Q-value.

For the switching element, it is possible to use a well-known element such as a transistor, a MOS-FET or the like. It is possible for the switching frequency implemented by the switching element to employ 1MHz or more as mentioned above and it is also possible to employ 10MHz or more.

Here, it is preferable to employ a configuration in which the higher the switching frequency for the switching element, the smaller the average particle size ($D_{50}$) of the metallic magnetic powder of the composite magnetic body embedding the coil is made. Thus, it is possible to sufficiently suppress the intra-particle eddy current loss which is generated in the case of supplying the coil component (inductor element) with a pulse current fractionized into the aforesaid switching frequency.

Therefore, for the coil component equipped in the electronic equipment which is provided by the present invention, it is preferable to make the average particle size $D_{50}[\mu$m] of the metallic magnetic powder of the composite magnetic body smaller than the upper limit particle size $D_{MAX}[\mu$m] defined by the following formula (2) in which the switching frequency and the switching element are made to be variables. This formula (2) is a formula obtained by substituting the switching frequency of the switching element for the upper limit operation-frequency (Fmax) on the right side of the abovementioned formula (1a), and more specifically, it is expressed as follows:

$$D_{MAX} = 2.192 \times (\text{switching frequency})^{-0.518} \times \rho^{0.577} \ ... \ (2).$$

The upper limit particle size $D_{MAX}$ expressed by the abovementioned formula (2) is an upper limit value of the average particle size ($D_{50}$) of the metallic magnetic powder (however, whose electrical-resistivity is ($\rho$)) for a condition in which the inductor element applied with an AC voltage having a certain switching frequency shows the "Qmax equivalent value".

For example, when referring to the example shown in FIG. 3, in a case in which the composite magnetic body is created by the metallic magnetic powder whose electrical-resistivity ($\rho$) is 85[$\mu\Omega\cdot$cm] and concurrently, in a case in which the switching frequency of the electronic equipment is 5MHz, the upper limit particle size $D_{MAX}$ becomes 12.5[$\mu$m]. Therefore, if the average particle size ($D_{50}$) of the metallic magnetic powder employed for the composite magnetic body is 12.5[$\mu$m] or less (for example, 10[$\mu$m]), it is possible to realize an inductor element whose maximum Q-value is the "Qmax equivalent value".

As described above, according to the present invention, there can be provided a support apparatus which identifies an allowable upper limit value ($D_{MAX}$) of the average particle size $D_{50}[\mu$m] of a metallic magnetic powder which has a predetermined electrical-resistivity ($\rho[\mu\Omega\cdot$cm)]) and which is used for the composite magnetic body embedded with a coil.

This support apparatus is an apparatus which supports the creation of the coil component by identifying the average particle size $D_{50}[\mu m]$ of the metallic magnetic powder of the coil component for realizing the "Qmax equivalent value". Then, this support apparatus includes a storage unit, an input unit, a reference unit, and an output unit.

In the storage unit, there is stored the information expressing the following formula (3) which is obtained by substituting the applied-frequency of the AC voltage which is applied to the coil component for the switching frequency on the right side of the abovementioned formula (2):

$$D_{MAX} = 2.192 \times (\text{applied-frequency})^{-0.518} \times \rho^{0.577} \ ... \ (3).$$

The input unit is an interface which receives from users the information expressing the electrical-resistivity ($\rho$) and the applied-frequency.

The reference unit is a means which refers to the abovementioned storage unit and reads out the allowable upper limit value ($D_{MAX}$) of the average particle size ($D_{50}$) of the metallic magnetic powder by substituting the electrical-resistivity and the applied-frequency, which are inputted to the input unit, for the abovementioned formula (3).

Then, the output unit is a means outputting the allowable upper limit value ($D_{MAX}$) which is read out by the reference unit.

For the support apparatus of the present exemplified embodiment, it is possible, so as to be able to execute the corresponding-processing operations by reading computer programs, to implement a configuration in which there is used a hardware built by general-purpose devices such as a CPU (Central Processing Unit), a ROM (Read Only Memory), a RAM (Random Access Memory), an I/F (Interface) unit and the like; there is used a dedicated logic circuit which is built so as to execute predetermined processing-operations; there is used a combination of those above; or the like.

Specifically, the storage unit is a storage device such as of a RAM and the like, in which there is stored the information expressing the function format and each coefficient of the abovementioned formula (3). Besides the above, it is also allowed for the storage unit to store the formula (3) in a table format formed by two variables of the applied-frequency and the electrical-resistivity ($\rho$). The input unit is an input I/F unit such as a keyboard or the like and the output unit is an output I/F unit such as a display or the like. The reference unit is realized as a function of a CPU.

However, for the various kinds of constituents of the support apparatus, it is enough if they are to be constituted so as to realize the functions thereof, and it is possible for the constituents to be realized, for example, by the configurations of: a dedicated hardware exerting a predetermined function; a data processing device assigned with a predetermined function by a computer program; a predetermined function realized in a data processing device by a computer program; and an arbitrary combination of those above; and the like. Then, it is not necessary for the various kinds of constituents of the support apparatus to be individually independent existences and it is allowed to employ such a configuration in which one constituent is a portion of another constituent, in which a portion of a certain constituent is overlapped with a portion of another constituent, or the like.

According to the support apparatus of the present exemplified embodiment, from the applied-frequency to the created coil component 100 and the electrical-resistivity of the used metallic magnetic powder, it is possible to calculate the allowable upper limit value ($D_{MAX}$) of the average particle size ($D_{50}$) of the aforesaid metallic magnetic powder. On the other hand, if making the average particle size ($D_{50}$) of the metallic magnetic powder too small, the process of microparticulating the metallic powder by the water atomizing method or the like becomes complicated and in addition, there is such a problem that liquidity of the composite magnetic body is lowered and formability thereof becomes inferior, and the like. Therefore, it is preferable for the average particle size ($D_{50}$) of the metallic magnetic powder to be equal to or less than the allowable upper limit value ($D_{MAX}$) and to be equal to or more than 50% of the aforesaid allowable upper limit value ($D_{MAX}$), and it is more preferable to be equal to or more than 70%, and it is still more preferable to be equal to or more than 80%. By employing the average particle size ($D_{50}$) having such a numerical-value range, it is possible to obtain a high Q-value for the inductor element and also, it is possible to manufacture such an inductor element easily and also stably. Then, by employing a configuration in which the average particle size ($D_{50}$) of the metallic magnetic powder is equal to or more than 70% and equal to or less than 100% of the allowable upper limit value ($D_{MAX}$), it is possible, even in the case of selecting any numerical value within the aforesaid ranges, to adjust the average particle size ($D_{50}$) of the metallic magnetic powder by a common particle-classification process.

<Manufacturing Method of Coil Component>

There is no limitation in particular for the manufacturing method of the coil component 100 in the present exemplified embodiment and it is possible to employ many kinds of manufacturing methods. Hereinafter, there will be explained a plurality of embodiments of the manufacturing method.

(Embodiment 1) Manufacturing Method by Compression-Molding

(1-1) Preparation Process

In this method, first, there is prepared a winding coil composed of a rectangular wire or a round wire. For the coil, it is possible to use a coil constituted by a wound portion, which is formed by winding a wire, (refer to coil 15: FIG. 1A) and by the both end-portions of the winding wire, which is pulled out from this wound portion, (refer to non-wound portion 19: FIG. 1A). However, it is allowed for the coil to use a coil having a magnetic core 12 and a terminal portion 16 such as the coil-assembly body 10 shown in FIGS. 1A and 1B.

On the other hand, there is prepared metallic magnetic powder having substantially spherical shape, which is created by miniaturizing a metallic magnetic material depending on granulation method such as water atomization method, gas atomization, or the like. At that time, by referring to the abovementioned formula (3), the allowable upper limit value ($D_{MAX}$), which is determined based on the electrical-resistivity ($p$) of the metallic magnetic material and the applied-frequency of the coil component, is calculated beforehand. Then, the miniaturized metallic magnetic powder is particle-classified and the metallic magnetic powder is prepared such that the average particle size ($D_{50}$) thereof becomes the abovementioned allowable upper limit value ($D_{MAX}$) or less. Next, a binder material and, if necessary, a solvent are added to and mixed with this metallic magnetic powder, and the composite magnetic body which is dried or the composite magnetic body which is pasty will be prepared. It should be noted that there is no limitation in particular for the order of additions of the metallic magnetic powder, the binder resin and the solvent. It is allowed for the abovementioned mixing to employ a kneading granulation. In addition, it is also allowed to employ the particle-classification after the mixing. For the method of the particle-classification, there can be cited such as, for example, dry particle-classification such as sieve particle-classification, inertial particle-classification and a centrifugal particle-classification; sedimentation particle-classification such as wet particle-classification; and the like.

(1-2) Compression-Molding Process

The coil is placed in the inside of a mold for a normal-temperature press machine and the composite magnetic body is put into the mold from the opening thereof so as to embed the wound portion of the coil. However, the both end-portions of the winding wire are arranged to be exposed from the composite magnetic body.

Next, from the both sides or either one side of the up/down sides of the mold, the pressure of, for example, 1 to 5 [ton/cm$^2$] is applied against the composite magnetic body and the coil inside the mold by using a movable punch (press head). Thus, the composite magnetic body is compressed and the composite magnetic body and the coil portion are integrated.

(1-3) Taking-out Process

Thereafter, the abovementioned integrated coil portion is taken out from the mold, and the binder resin is cured, if necessary, by passing through the thermosetting-process. Thereafter, there are further applied, if necessary, various kinds of processes of such as polishing and coating of the surface of the composite magnetic body, terminal processing of the both end-portions of the winding wire and the like, selectively.

(Embodiment 2) Manufacturing Method by Warm Molding (Hot Press Method)

(2-1) Preparation Process

It is possible to employ a process common with the process explained in the abovementioned item (1-1).

(2-2) Warm Molding Process

In this process, similarly as the abovementioned process in the item (1-2), the coil and the metallic magnetic material are integrated. Specifically, it is possible to employ the following process (A) or process (B).

(A) The coil is put into the heated mold of the press machine, and the dried powdery or pasty composite magnetic body which is prepared by the process in the item (2-1) is put into there from the above side thereof. Next, from the both sides or either one side of the up/down sides of the mold, the pressure of 10[kg/cm$^2$] to 1[ton/cm$^2$] is applied against the composite magnetic body and the coil in the mold by using a movable press head and thus, those above are integrated. In the case of using a thermosetting resin for a binder resin contained in the composite magnetic body, it is excellent to employ a configuration in which first, the thermosetting resin is heated and softened at a temperature equal to or less than the thermosetting temperature and also equal to or more than the softening temperature and in this situation, a press molding for integration is carried out and after the molding, the composite magnetic body and the coil are heated at a temperature equal to or more than the thermosetting temperature.

(B) The dried powdery or pasty composite magnetic body which is prepared in the item (2-1) is put into the heated mold of the press machine and next, the coil is put into the inside of the mold so as to be laid onto the composite magnetic body thereof. The process thereafter is common with that of the abovementioned item (A).

According to the process of the item (2-2), there can be obtained such an advantage that the required press power becomes much lower than the pressure load of (Embodiment 1) in the compression-molding and therefore damage to the coil occurs less often.

(2-3) Taking-out Process

In the case of using a thermoplastic resin for the binder resin which is contained in the composite magnetic body or in the case of using a thermosetting resin for the binder resin and taking out the composite magnetic body from the mold before the thermosetting thereof, the mold is cooled to a temperature equal to or less than the softening temperature of the binder resin. Thereafter, the coil component in which the composite magnetic body and the coil are integrated is taken out from the mold. In the case of using a thermosetting resin for the binder resin and curing it thermally in the inside of the mold, it is possible to take out the coil component from the mold without the cooling. Thereafter, there are further applied, if necessary, various kinds of processes such as polishing and coating of the surface of the composite magnetic body, terminal processing of the both end-portions of the winding wire and the like, selectively.

(Embodiment 3) Manufacturing Method by Injection Molding

(3-1) Preparation Process

It is possible to employ a process common with the process explained in the abovementioned item (1-1).

(3-2) Injection Molding Process

The dried composite magnetic body or the pasty composite magnetic body, which was prepared, is put into a screw machine of an injection molding machine and is stirred in a heated condition and made to be in a state like a slurry. Next, the abovementioned coil is placed in the inside of the mold (cavity) of the injection molding and the mold is tightened. Next, the abovementioned slurry-like composite magnetic body whose liquidity is excellent is injected into the inside of the mold through a gate (opening) of the mold by a high injection pressure and this state is held for a while, and the composite magnetic body is cured.

(3-3) Taking-out Process

Thereafter, the coil component in which the coil and the composite magnetic body are integrated is taken out from the mold. Thereafter, there are further applied, if necessary, various kinds of processes such as polishing and coating of the surface of the composite magnetic body, terminal processing of the both end-portions of the winding wire and the like, selectively.

(Embodiment 4) Manufacturing Method by Transfer Molding

(4-1) Preparation Process

It is possible to employ a process common with the process explained in the abovementioned item (1-1). However, it is allowed for the composite magnetic body to be formed in a pellet shape; this helps to ensure that each manufactured composite magnetic body has the same weight.

(4-2) Transfer Molding Process

First, the abovementioned coil is placed in the inside of the mold (cavity) and the mold is tightened. Next, the composite magnetic body, which was once heated and softened in the plunger, is forced into the heated cavity through a flow channel such as a gate or the like, and it is molded and cured.

(4-3) Taking-out Process

It is possible to employ a process common with the process explained in the abovementioned item (3-3).

(Embodiment 5) Forming Method of Plastic (Clay-State) Material at Room Temperature

(5-1) Preparation Process

This process is almost common with the process explained in the abovementioned item (1-1). However, the composite magnetic body has strong plasticity and is to be prepared into a clay state so as to be deformed in response to pressure and therefore, there will be added an organic solvent such as diethylphthalate or the like as a plasticizer. The prepared clay-like composite magnetic body is formed in a block shape or in a sheet shape. The clay-like composite magnetic body has a characteristic that there is almost no fluidity. It is excellent to use a thermosetting resin for the binder resin.

(5-2) Molding Process

First, the coil is put into the mold and from the above thereof, the block-shaped or sheet-shaped composite magnetic body is put into the aforesaid mold. Next, from the both sides or either one side of the up/down sides of the mold, the pressure of, for example, 0.1[kg/cm$^2$] to 50[kg/cm$^2$] is applied against the composite magnetic body and the coil in the inside of the mold by using a movable punch (press head). Thus, the composite magnetic body is compressed and the composite magnetic body and the coil portion are integrated.
Compared with other manufacturing methods, this molding process has a characteristic that the composite magnetic body can be deformed by a low pressure. In addition, this molding process can be carried out under a normal temperature.

(5-3) Taking-out Process

Thereafter, the coil component in which the coil and the composite magnetic body are integrated is taken out from the mold. Thereafter, the binder resin is thermally cured by applying the thermosetting-process. Thereafter, there are further applied, if necessary, various kinds of processes such as polishing and coating of the surface of the composite magnetic body, terminal processing of the both end-portions of the winding wire and the like, selectively.

(Embodiment 6) Manufacturing Method by Wet Molding

(6-1) Preparation Process

This process is almost common with the process explained in the abovementioned item (1-1). It is excellent if adding solvent to the composite magnetic body and prepare it in a pasty state at a normal temperature.

(6-2) Molding Process

First, the coil is put into the mold and the pasty composite magnetic body is put into there from the above side thereof. Next, the composite magnetic body spilled out from the mold is removed by a tool such as of a blade, a cutter or the like. Further, the drying of the solvent is carried out. At that time, the pressure loaded on the coil and the composite magnetic body is negligibly low. In this molding process, there can be obtained such an advantage that the load to coil is low and in addition, the manufacturing equipment can be simplified because the process is applied at a room temperature.

(6-3) Taking-out Process

Thereafter, the coil component in which the coil and the composite magnetic body are integrated is taken out from the mold. Thereafter, in a case in which the binder resin is a thermosetting resin, a thermosetting-process is applied thereto and the binder resin is cured. Thereafter, there are further applied, if necessary, various kinds of processes such as polishing and coating of the surface of the composite magnetic body, terminal processing of the both end-portions of the winding wire and the like, selectively.

(Embodiment 7) Manufacturing Method by Hydro-forming

(7-1) Preparation Process

It is possible to employ a process common with the process explained in the abovementioned item (1-1).

(7-2) Hydro-forming Process

A plurality of coils are placed at a large concave-type tray and a composite magnetic material is put thereinto so as to embed those coils. Next, a metal-made pressurizing part having a rubber-made distal-end portion is put onto the abovementioned tray and a shielded space is formed so as to prevent the composite magnetic body from leaking. Next, the abovementioned tray and the pressurizing part are dipped together into a liquid layer in which water or oil is stored and further, the composite magnetic body is pressurized by applying a load to the pressurizing part.

(7-3) Taking-out Process

Thereafter, the coil component in which the coil and the composite magnetic body are integrated is taken out from the mold. Thereafter, in a case in which the binder resin is a thermosetting resin, a thermosetting-process is applied thereto and the binder resin is cured. Thereafter, there are further applied, if necessary, various kinds of processes such as cutting of individual coils, polishing and coating of the surface of the composite magnetic body, terminal processing of the both end-portions of the winding wire and the like, selectively.

The manufacturing method of the coil component according to the present invention is a method which is represented by the embodiments 1 to 7 as mentioned above and is a manufacturing method of a coil component which includes a coil formed by winding an insulation-coated wire and a composite magnetic body embedded with this coil. Then, the metallic magnetic powder contained in the composite magnetic body is a powder which has the average particle size ($D_{50}$) satisfying the abovementioned formula (1) which is formed by making the applied-frequency to a coil component and the electrical-resistivity as variables. According to the manufacturing methods of the abovementioned embodiments 1 to 7, it is possible to form the composite magnetic body, which is obtained by mixing a metallic magnetic powder and a binder resin, in a block shape or the like in a state of being in close contact with the coil without any gap.

The abovementioned exemplified embodiments include the following technical ideas.

<1> A coil component including a coil formed by winding an insulation-coated wire and a composite magnetic body embedded with the coil, wherein the composite magnetic body contains: a metallic magnetic powder made by powderizing a metallic magnetic material and a binder resin; and wherein the average particle size $D_{50}[\mu m]$ of the metallic magnetic powder satisfies the following formula (1):

$$D_{50} \leq 2.192 \times (Fmax)^{-0.518} \times \rho^{0.577} \dots (1)$$

however, it should be noted therein that (Fmax) is upper limit operation-frequency [MHz] at which Q-value starts decreasing beyond the maximum value in a case of increasing the frequency applied to the coil component, and that "p" is electrical-resistivity [$\mu\Omega\cdot$cm] of the metallic magnetic material.

<2> The coil component according to the abovementioned item <1>, wherein the (Fmax) is 1MHz or more.

<3> The coil component according to the abovementioned item <1> or <2>, wherein the electrical-resistivity is 10[$\mu\Omega\cdot$cm] or more and 140[$\mu\Omega\cdot$cm] or less.

<4> The coil component according to any one of the abovementioned items <1> to <3>, wherein the metallic magnetic material is an alloy formed by Fe and at least one or more kinds of metallic materials selected from a group which is composed of Ni, Si, Cr and Al.

<5> The coil component according to any one of the abovementioned items <1> to <3>, wherein the metallic magnetic powder is a crystalline iron powder.

<6> An electronic equipment including: the coil component according to any one of the abovementioned items <1> to <5>; a switching element whose switching frequency is 1MHz or more; and a circuit board including a switching circuit equipped with the coil component and the switching element.

<7> The electronic equipment according to the abovementioned item <6>, wherein the average particle size $D_{50}[\mu m]$ is below the upper limit particle size $D_{MAX}[\mu m]$ which is defined by the following formula (2) obtained by substituting the switching frequency for Fmax on the right side of the formula (1):

$$D_{MAX} = 2.192 \times (\text{switching frequency})^{-0.518} \times \rho^{0.577} \ ... \ (2).$$

<8> A metallic magnetic powder which is made by powderizing a metallic magnetic material and which is used for the coil component according to any one of the abovementioned items <1> to <5>, wherein the average particle size $D_{50}[\mu m]$ thereof satisfies the following formula (1):

$$D_{50} \leq 2.192 \times (Fmax)^{-0.518} \times \rho^{0.577} \ ... \ (1)$$

wherein (Fmax) is upper limit operation-frequency [MHz] at which Q-value starts decreasing beyond the maximum value in a case of increasing the frequency applied to the coil component, and "p" is electrical-resistivity [$\mu\Omega \cdot cm$] of the metallic magnetic material.

<9> A support apparatus that identifies an allowable upper limit value ($D_{MAX}$) of the average particle size $D_{50}[\mu m]$ of a metallic magnetic powder which has a predetermined electrical-resistivity ($\rho[\mu\Omega \cdot cm]$) and which is used for a composite magnetic body embedded with a coil including: a storage unit which is stored with information expressing the following formula (3):

$$D_{MAX} = 2.192 \times (\text{applied-frequency})^{-0.518} \times \rho^{0.577} \ ... \ (3);$$

an input unit which accepts an input having electrical-resistivity (p) and having applied-frequency; a reference unit which reads out the allowable upper limit value ($D_{MAX}$) of the average particle size $D_{50}$ of the metallic magnetic powder by referring to the storage unit and by substituting the electrical-resistivity and the applied-frequency, which were inputted, for the formula (3); and an output unit which outputs the allowable upper limit value ($D_{MAX}$), which was read out.

Having described preferred embodiments of the invention with reference to the accompanying drawings, it is to be understood that the invention is not limited to those precise embodiments and that various changes and modifications could be effected therein by one skilled in the art without departing from the invention as defined in the appended claims.

**Claims**

1. A coil component (100) including a coil (15) formed by winding an insulation-coated wire (18) and a composite magnetic body (20) embedded with the coil (15),
   wherein the composite magnetic body (20) contains:

   a metallic magnetic powder made by powderizing a metallic magnetic material and a binder resin; and
   wherein the average particle size $D_{50}[\mu m]$ of the metallic magnetic powder satisfies the following formula (1):

$$D_{50} \leq 2.192 \times (Fmax)^{-0.518} \times \rho^{0.577} \ ... \ (1)$$

   wherein (Fmax) is upper limit operation-frequency [MHz] at which Q-value starts decreasing beyond the maximum value in a case of increasing the frequency applied to the coil component, and "p" is electrical-resistivity [$\mu\Omega \cdot cm$] of the metallic magnetic material.

2. The coil component (100) according to claim 1, wherein Fmax is 1MHz or more.

3. The coil component (100) according to claim 1 or 2, wherein the electrical-resistivity is 10[$\mu\Omega \cdot cm$] or more and 140[$\mu\Omega \cdot cm$] or less.

4. The coil component (100) according to any one of claims 1 to 3, wherein the metallic magnetic material is an alloy formed by Fe and at least one or more kinds of metallic materials selected from a group which is composed of Ni, Si, Cr and Al.

5. The coil component (100) according to any one of claims 1 to 3, wherein the metallic magnetic powder is a crystalline iron powder.

6. Electronic equipment comprising:

   the coil component (100) according to any one of claims 1 to 5;
   a switching element whose switching frequency is 1MHz or more; and
   a circuit board including a switching circuit equipped with the coil component and the switching element.

7. The electronic equipment according to claim 6, wherein the average particle size $D_{50}[\mu m]$ is below the upper limit particle size $D_{MAX}[\mu m]$ which is defined by the following formula (2):

$$D_{MAX} = 2.192 \times (\text{switching frequency})^{-0.518} \times \rho^{0.577} \dots (2).$$

8. A metallic magnetic powder which is made by powderizing a metallic magnetic material and which is used for the coil component (100) according to any one of claims 1 to 5, wherein
the average particle size $D_{50}[\mu m]$ thereof satisfies the following formula (1):

$$D_{50} \leq 2.192 \times (Fmax)^{-0.518} \times \rho^{0.577} \dots (1)$$

wherein (Fmax) is upper limit operation-frequency [MHz] at which Q-value starts decreasing beyond the maximum value in a case of increasing the frequency applied to the coil component, and "p" is electrical-resistivity [$\mu\Omega \cdot cm$] of the metallic magnetic material.

9. A support apparatus that identifies an allowable upper limit value ($D_{MAX}$) of the average particle size $D_{50}[\mu m]$ of a metallic magnetic powder which has a predetermined electrical-resistivity ($\rho[\mu\Omega \cdot cm]$) and which is used for a composite magnetic body (20) embedded with a coil (15), comprising:

   a storage unit which is stored with information expressing the following formula (3):

$$D_{MAX} = 2.192 \times (\text{applied-frequency})^{-0.518} \times \rho^{0.577} \dots (3);$$

   an input unit which accepts an input having electrical-resistivity ($\rho$) and having applied-frequency;
   a reference unit which reads out the allowable upper limit value ($D_{MAX}$) of the average particle size ($D_{50}$) of the metallic magnetic powder by referring to the storage unit and by substituting the electrical-resistivity and the applied-frequency, which were inputted, for the formula (3); and
   an output unit which outputs the allowable upper limit value ($D_{MAX}$), which was read out.

## FIG. 1A

## FIG. 1B

**FIG. 2**

**FIG. 3**

## FIG. 4

Europäisches
Patentamt

European
Patent Office

Office européen
des brevets

# EUROPEAN SEARCH REPORT

Application Number

EP 19 15 9420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/062640 A1 (SASAMORI ET AL) 6 March 2014 (2014-03-06) * paragraphs [0022] - [0033] * * tables 1, 2 * | 1-9 | INV. H01F1/26 H01F1/147 H01F3/08 H01F27/255 |
| X | US 2017/294254 A1 (URATA ET AL) 12 October 2017 (2017-10-12) * paragraphs [0161] - [0165] * * table 18 * | 1-9 | H01F41/02 B22F1/00 H01F3/10 H01F17/04 |
| X | US 2016/351315 A1 (PARK ET AL) 1 December 2016 (2016-12-01) * paragraphs [0060] - [0066] * * claims 1, 7-11 * * table 1 * | 1-9 | ADD. H01F1/33 |

TECHNICAL FIELDS
SEARCHED        (IPC)

H01F
B22F

The present search report has been drawn up for all claims

| Place of search | Date of completion of the search | Examiner |
|---|---|---|
| Munich | 8 August 2019 | Subke, Kai-Olaf |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 19 15 9420

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2019

| Patent document cited in search report | | Publication date | Patent family member(s) | | | Publication date |
|---|---|---|---|---|---|---|
| US 2014062640 | A1 | 06-03-2014 | CN | 103680849 | A | 26-03-2014 |
| | | | EP | 2706543 | A1 | 12-03-2014 |
| | | | JP | 2014067991 | A | 17-04-2014 |
| | | | KR | 20140032326 | A | 14-03-2014 |
| | | | TW | 201419324 | A | 16-05-2014 |
| | | | US | 2014062640 | A1 | 06-03-2014 |
| US 2017294254 | A1 | 12-10-2017 | CN | 103794327 | A | 14-05-2014 |
| | | | DE | 102007004835 | A1 | 06-09-2007 |
| | | | JP | 4849545 | B2 | 11-01-2012 |
| | | | JP | 2007231415 | A | 13-09-2007 |
| | | | KR | 20070079575 | A | 07-08-2007 |
| | | | KR | 20080059357 | A | 27-06-2008 |
| | | | TW | I383410 | B | 21-01-2013 |
| | | | US | 2007175545 | A1 | 02-08-2007 |
| | | | US | 2017294254 | A1 | 12-10-2017 |
| US 2016351315 | A1 | 01-12-2016 | JP | 6195256 | B2 | 13-09-2017 |
| | | | JP | 2016225604 | A | 28-12-2016 |
| | | | KR | 20160140153 | A | 07-12-2016 |
| | | | US | 2016351315 | A1 | 01-12-2016 |

EPO FORM P0459

For more details about this annex : see Official Journal of the European Patent Office, No. 12/82

**EP 3 547 334 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018064082 A

- JP 2006319020 A